# EUROPEAN PATENT APPLICATION

(11) **EP 1 034 915 A2**
(43) Date of publication of application: **13.09.2000**
(21) Application number: 00830171.5
(22) Date of filing: 07.03.2000
(51) Int. Cl.: B29C 70/36, B32B 3/12

(54) **Process for the production of monolithic manufactures made of plastic resin with internal cell-like structure**

(30) Priority: 09.03.1999 IT RM990147
(71) Applicant: Schönfeld, Errico, 31100 Treviso (TV) (IT)
(72) Inventor: Schönfeld, Errico, 31100 Treviso (TV) (IT)
(74) Representative: Baldi, Claudio

(57) **Abstract**

The present invention relates to an industrial process for the production of monolithic manufactures, of flat, curve or tubular type, made of plastic resin cast inside the cells of a spacer (1b) with grid configuration located between two layers (1a,1c) of fibres or sheets of a material capable of impregnating or joining with the plastic resin cast inside the cells (C) of the grid spacer (1b).

## Description

The present patent application relates to an industrial process for the production of monolithic manufactures made of plastic resin with reinforcing fibres, provided with two opposite external walls and an internal cell-like structure.

The manufactures may be flat or curved panels or have a tubular configuration.

In any case, the manufactures feature very good resistance properties, thanks to the fibres immersed in the plastic resin and are extremely light thanks to their internal cell-like structure.

As an indication, the fibres can be, for example, glass or carbon fibres.

The market currently offers multi-layer manufactures (the so-called "sandwich" manufactures) whose external layers are glued onto the opposite faces of an intermediate spacer. These manufactures, therefore, do not have a monolithic structure.

The mechanical resistance of these manufactures depends on the mechanical resistance of the weaker component and/or the quality of the gluing system. For this reason the structures made with these manufactures present resistance limits that cannot exactly foreseen.

The process according to the invention allows for the realisation of resistant, light monolithic manufactures as explained above. Moreover, the cost-effectiveness of these manufactures is ensured by the fact that the internal cell-like structure is obtained by means of a spacer with fine-mesh grid configuration, made of a poor material with low resistance and cost, such as cardboard.

In fact, the spacer does not have a bearing or reinforcing function for the panel.

Its purpose is only to contain the fluid resin inside each mesh of the grid, thus favouring its uniform distribution on all walls of the mesh, including the top and bottom walls. In this way, once consolidated, the resin creates an internal cell-like structure.

During the distribution of the resin on the wall of each cell, the resin can "bind" with the spacer surfaces, if the spacer is made of a permeable material capable of impregnating with the resin.

The process according to the invention includes the following operating steps:
a - laying on the first support surface - either of flat or curved type - of a first fibre layer or sheet made of a material capable of impregnating or joining with the plastic resin used for the realisation of the manufacture;
b - placing and pressing on the fibre layer or sheet of a spacer with grid configuration;
c - resin cast inside each cell of the grid spacer;
d - laying on the spacer of a second fibre layer or sheet made of a material capable of impregnating or joining with the plastic resin cast in each cell;
e - pressing of the second fibre layer or sheet with a second support surface similar to the first one;
f - rotation of the "package" around an axis in order to automatically spread the fluid resin on the walls of each cell of the spacer, including the top and bottom walls represented by the first and second fibre layer or sheet;
e - removal of the two support surfaces and extraction of the manufacture once the cooling and consolidation stages of the plastic resin have been completed.

For major clarity the description of the process according to the invention continues with reference to the enclosed drawings, which are intended for purposes of illustration and not in a limiting sense, whereby:
- Fig. 1 is a schematic view of all the components used for the realisation of a flat panel manufactured with the process according to the invention;
- Fig. 2 is the cross-section of a portion of a curved panel manufactured with the process according to the invention;
- Fig. 3 is a schematic view of all the components used for the realisation of a tubular manufacture produced with the process according to the invention;
- Fig. 4 is a view of the grid structure of the spacer, with a cellular configuration.

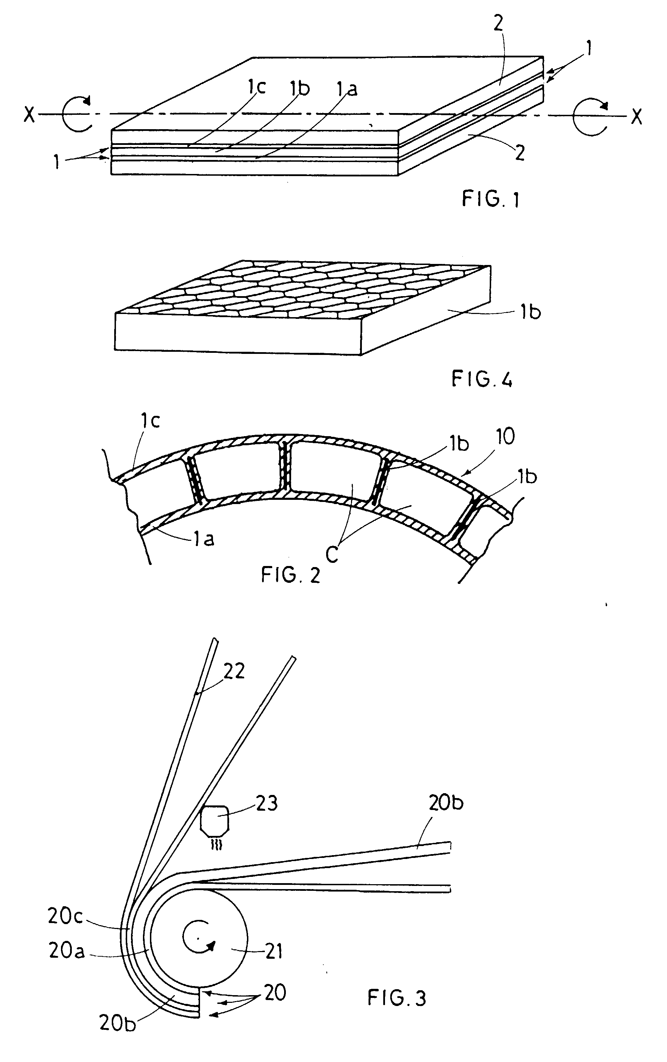

With reference to Fig. 1, the realisation of a flat panel (1) with the process according to the invention makes use of two opposite identical rigid support surfaces (2), such as two metal plates, between which all the components used for the realisation of the panel (1) are laid and pressed in the given order.

More precisely, a first fibre layer or sheet of a material capable of impregnating or joining with the plastic resin used to produce the manufacture is laid on the first support plate (2).

The first fibre layer or sheet is designed to be the first external wall (1a) of the panel (1).

A spacer (1b) with grid configuration is laid and pressed on the first fibre layer or sheet, in whose cells the resin plastic used to produce the panel (1) is cast.

A second fibre layer or sheet made of a material capable of impregnating or joining with the plastic resin cast inside the cells of the spacer (1b) is laid on the spacer (1b).

The second fibre layer or sheet is designed to be the second external wall (1c) of the panel (1).

The package made up of the spacer (1b) and the two external fibre layers or sheet is first pressed between the support plates (2) and then rotated around an X-X axis.

As shown in Fig. 2, which is a cross-section of a curved panel (10), due to rotation the resin cast into the cells of the spacer (1b) is automatically spread on the walls of each cell (C), including the top and bottom walls represented by the fibre layers or sheets.

Once the resin has solidified, a resistant light monolithic manufacture (1 or 10) with internal cell-like structure is obtained.

For the realisation of a tubular manufacture (20), as shown in Fig.3, a rotating cylindrical mandrel (21) can be used as internal support surface, around which the following components are wrapped:
a - a first fibre layer or sheet made of a material capable of impregnating or joining with the plastic resin used to produce the manufacture;
b - a spacer (20b) with grid configuration;
c - a second fibre layer or sheet made of a material capable of impregnating or joining with the plastic resin cast inside each cell of the spacer (20b);
e - an impermeable sheet (22).

Obviously, the fibre layers or sheets are designed to be the internal (20a) and external (20c) wall of the tubular manufacture (20).

If the mandrel rotates constantly, the ordered superimposition of all the components used for the production of the manufacture is endless and the resin can be poured on the manufacture being produced by means of an automatic distributor (23).

## Claims

1. Process for the production of monolithic manufactures, of flat, curve or tubular type made of plastic resin with internal cell-like structure characterised in that it includes the following operating steps:
a - laying on the first support surface (2 or 21) of a first fibre layer or sheet made of a material capable of impregnating or joining with the plastic resin used for the realisation of the manufacture (1, 10 or 20);
b - placing and pressing on the fibre layer or sheet of a spacer (1b or 20b) with grid configuration;
c - resin cast inside each cell of the grid spacer;
d - laying on the spacer (1b or 20b) of a second fibre layer or sheet made of a material capable of impregnating or joining with the plastic resin cast in each cell;
e - pressing of the second fibre layer or sheet with a second support surface (2 or 22);
f - rotation of the "package" around an axis in order to automatically spread the fluid resin on the walls of each cell (C) of the spacer, including the top and bottom walls represented by the first and second fibre layer or sheet;
e - removal of the two support surfaces and extraction of the manufacture once the cooling and consolidation stages of the plastic resin have been completed.

2. Process according to the previous claim characterised in that the two support surfaces (2) have a flat or curved profile.

3. Process according to claim 1) characterised in that the two support surfaces are represented by a rotating cylindrical mandrel (21) and an impermeable film (22), respectively.

4. Process according to the previous claims characterised in that the spacer is made of a material capable of impregnating with the plastic resin cast inside the cells.
